# EUROPEAN PATENT APPLICATION

(11) **EP 4 418 034 A1**
(43) Date of publication of application: **21.08.2024**
(21) Application number: 24157473.0
(22) Date of filing: 13.02.2024
(51) Int. Cl.: G02B 27/01

(54) **MOTION SENSOR INTEGRATION**

(30) Priority: 15.02.2023 US 202363485068 P; 24.01.2024 US 202418421020
(71) Applicant: Apple Inc., Cupertino, CA 95014 (US)
(72) Inventor: HUO, Edward S, Cupertino, 95014 (US); MONTEVIRGEN, Anthony S, Cupertino, 95014 (US); PAINTER, Christopher C, Cupertino, 95014 (US); TSANG, See-Ho, Cupertino, 95014 (US); NABANJA, Sheila P, Cupertino, 95014 (US); SOLDNER, Nicholas C, Cupertino, 95014 (US); GLEASON, Jeffrey N, Cupertino, 95014 (US); ZIMMERMAN, Aidan N, Cupertino, 95014 (US); RIOS, Jose A, Cupertino, 95014 (US)
(74) Representative: Rooney, John-Paul

(57) **Abstract**

A head-mountable device can include a display, a housing, a processor, and a camera module. The camera module can include a lens assembly, an optical sensor, a substrate, and a motion sensor attached to the camera module to determine a motion of the camera module. The processor can be communicatively coupled to the motion sensor, and can generate a signal based on the motion.

## Description

### CROSS-REFERENCE TO RELATED APPLICATION(S)

This claims priority to U.S. Provisional Patent Application No. 63/485,068; filed 15 February 2023, and entitled "Motion Sensor Integration," the entire disclosure of which is hereby incorporated by reference in its entirety.

### FIELD

The described embodiments relate generally to electronic devices having integrated motion sensors. More particularly, the present embodiments relate to aligned sensors having integrated inertial measurement units (IMUs).

### BACKGROUND

In modern use, electronic devices are highly mobile, especially wearable electronic devices. This mobility results in an increased need for electronic components capable of monitoring a status and positioning of the device and of the components on or in the device. These considerations can be particularly relevant to devices that rely on operatively connected components, such as sensor arrays, where components need to be aligned in a certain pose or orientation relative to one another.

The desire for more complex monitoring and functionality is countered by the competing desire for simplicity of design and a reduction in cost. With these competing demands, there is a need for a cost efficient system for monitoring self-articulating systems without vastly increasing the complexity of the systems.

### SUMMARY

According to some aspects of the present disclosure, a head-mountable device can include a display, a housing, a processor, and a camera module. The camera module can include a lens assembly, an optical sensor, a substrate, and a motion sensor attached to the camera module to determine a motion of the camera module. The processor can be communicatively coupled to the motion sensor, and can generate a signal based on the motion.

In some examples, the camera module can be a first camera module and the head-mountable device can include a second camera module. The motion sensor can be a first motion sensor to transmit first motion data to the processor. The first motion sensor can be directly attached to at least one of the lens assembly, the optical sensor, or the substrate. The second camera module can include a second motion sensor to transmit second motion data to the processor. The processor can compare the first motion data and the second motion data.

In some examples, the lens assembly includes a lens barrel that houses a lens. The motion sensor can be attached to the lens barrel. The motion sensor can at least partially define an exterior of the camera module. The motion sensor can be encapsulated in the camera module. The motion sensor can be disposed within a cavity defined by the camera module. The motion sensor can detect a movement of the camera module relative to the housing. The signal generated by the processor can cause a change in an operating protocol of the head-mountable device.

In some examples, the motion sensor includes at least one of a gyroscope, an accelerometer, or a magnetometer. The motion sensor can receive motion data. The processor can compare the received motion data to expected motion data and if the received motion data varies from the expected motion data above a predetermined threshold, the processor can adjust an operating parameter of the head-mountable device. Adjusting the operating parameter can include recalibrating the camera module to account for a misalignment of the camera module. The camera module can be a first camera module and the head-mountable device can include a second camera module that is operationally coupled to the first camera module. The motion sensor can be a first motion sensor and the second camera module can include a second motion sensor. The expected motion can be based on motion data from the second motion sensor.

According to some aspects, an electronic device can include a first sensor, a second sensor intended to be operationally aligned with the first sensor, and an inertial measurement unit (IMU) disposed on the first sensor to generate a signal based on motion of the first sensor. A processor can receive the signal and detect a misalignment between the first sensor and the second sensor based on the signal.

In some examples, the first sensor can include a first camera, and the second sensor can include a second camera. The signal can be based on rotational motion of the first sensor. The IMU can detect motion of the electronic device and the first sensor. The first sensor can be attached to a frame of the electronic device at a first location, and the second sensor can be attached to the frame at a second location. The IMU can be a first IMU directly attached to the first sensor, and the second sensor can include a second IMU directly attached to the second sensor.

According to some aspects, a camera module can include a lens barrel, a photon detector, a substrate, and an inertial measurement unit directly connected to at least one of the lens barrel, the photon detector, or the substrate.

In some examples, the inertial measurement unit can include at least one of a gyroscope, an accelerometer, a magnetometer. The inertial measurement unit can be disposed in a recess defined by the camera module.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a top view of a head-mountable device.
FIG. 2 shows a schematic block diagram of an electronic device.
FIG. 3 shows a top view of a head-mountable device having aligned sensors.
FIG. 4 shows a top view of a head-mountable device having misaligned sensors.
FIG. 5 shows a top view of a head-mountable device having misaligned sensors.
FIG. 6 shows a misaligned head-mountable device rotating about an axis.
FIG. 7A shows a motion sensor disposed on a lens barrel of a camera module.
FIG. 7B shows a motion sensor positioned in a lens barrel of a camera module.
FIG. 8A shows a motion sensor positioned on a photon detector of a camera module.
FIG. 8B shows a motion sensor positioned in a photon detector of a camera module.
FIG. 9A shows a motion sensor positioned on a substrate of a camera module.
FIG. 9B shows a motion sensor positioned in a substrate of a camera module.
FIG. 10 shows a process flow diagram for detecting a misalignment and recalibrating.

### DETAILED DESCRIPTION

The following description provides a number of examples of the present concepts, with various levels of details. The description provides various examples and should not be interpreted as limiting in any way.

In head mounted devices (HMD) or other platforms that rely on multiple cameras for tracking the device itself or other objects, knowledge of camera pose is critical for sufficient tracking precision and accuracy. As devices undergo environmental and handling stresses, they may experience small but significant deformations affecting camera pose.

There are a number of reasons that a sensor may come out of alignment. For example, the sensor may come out of alignment through drop events, impacts, thermal changes, user forces, band tension, housing flex, etc. Methods for determining camera pose relative to other cameras is critical to ensure a quality user experience.

Traditional means of compensating for these stresses includes using floating brackets that deflect without yielding but take up significant internal volume that may not be available, or using algorithmic methods on the video streams to calculate pose but demand significant field of view that may not be available. In addition, a separate inertial measurement unit (IMU) is often relied upon but may have also shifted relative to the camera module from the initially known state.

As package size, power requirements, and costs of IMUs all reduce over time, integration of IMUs directly into/onto individual camera modules becomes more feasible. The direct integration greatly reduces the possibility of shift between the camera optical stack and the IMU due to system deformations, increasing accuracy and precision of camera pose knowledge. Interconnects can be simplified by incorporating IMU signals and camera signals along parallel physical pathways or even sharing pathways.

The following disclosure relates to integrating an IMU onto a sensor module in order to determine individual pose of the sensor module, separate from the pose of the HMD. This disclosure is particularly relevant for electronic devices having stereo camera systems whose alignment needs to be understood to properly interpret the received visual data.

In some examples, a determination that the system is misaligned can be made by comparing relative changes (deltas) in the IMUs. Based on the relative changes in IMU data, the pose of each camera module can be calculated. In some examples, an IMU integrated onto/into a camera module can advantageously save space within the electronic device by freeing up the volume that would be occupied by an IMU separate from the camera module. For example, by integrating the IMU onto the camera module stack tolerances can be minimized and the number of joints between the IMU and the camera module can be reduced.

It will be understood that the concept of an IMU integrated onto a sensor is applicable to a number of electronic devices and is not limited to HMD's. Indeed, the concepts and structures described herein can be applied to any system having a sensor with a predetermined alignment or pose. While the preferred embodiments of the disclosure relate to multi-sensor systems, the concepts discussed herein can be applied to a single sensor system. Likewise, the sensor onto which the IMU is integrated is not limited to cameras, but can include audio sensors, capacitive sensors, magnetic sensor, electromagnetic sensors, temperature sensors, or any other transmitter or receiver whose pose or orientation relative to the electronic device impacts the detected input of the sensor.

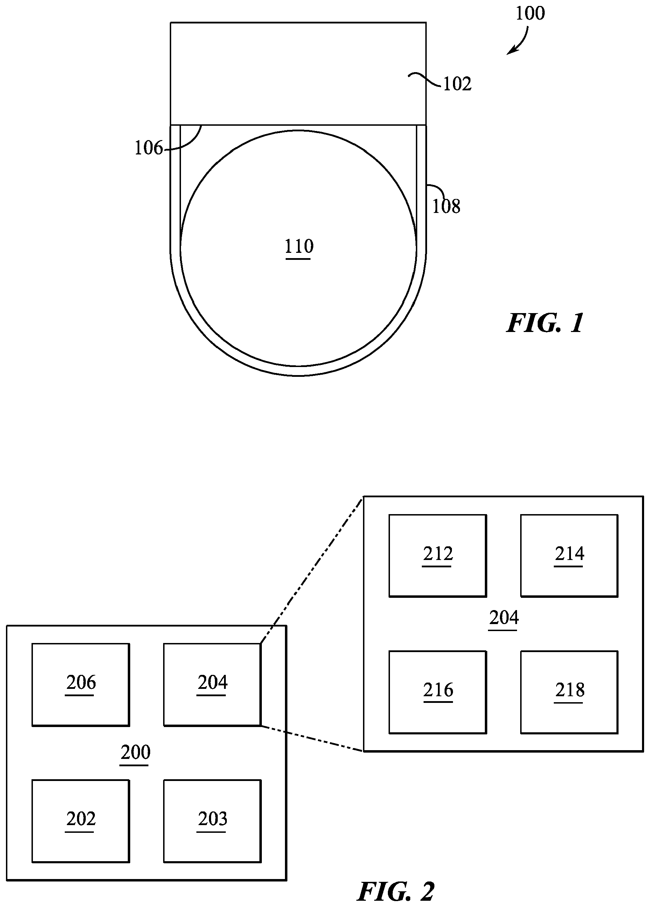

These and other embodiments are discussed below with reference to FIGS. 1-10. However, those skilled in the art will readily appreciate that the detailed description given herein with respect to these Figures is for explanatory purposes only and should not be construed as limiting. Furthermore, as used herein, a system, a method, an article, a component, a feature, or a sub-feature including at least one of a first option, a second option, or a third option should be understood as referring to a system, a method, an article, a component, a feature, or a sub-feature that can include one of each listed option (*e.g.,* only one of the first option, only one of the second option, or only one of the third option), multiple of a single listed option (*e.g.,* two or more of the first option), two options simultaneously (*e.g.,* one of the first option and one of the second option), or combination thereof (*e.g.,* two of the first option and one of the second option).

FIG. 1 shows a top view of a head-mountable device (HMD) 100. The HMD 100 can include a housing 102, a display 106, and a headband or retention band 108. In some examples, the display 106 includes an opaque, translucent, transparent, or semi-transparent screen, including any number of lenses, for presenting visual data to a user 110. The housing 102 can at least partially border one or more edges of the display 106. In some examples, the housing 102 can be configured to contact the user's face or head 110. In some examples, the housing 102 blocks outside light and limits the peripheral view of the user. Various components of the HMD 100 can be housed within the housing 102, such as a frame, battery, circuitry, and sensors. The hardware and electronics which allow functionality of the HMD 100 can be housed within the housing. In some examples, the housing 102 is a frame of the HMD 100.

The HMD 100 can be worn on the user's head 110 such that the HMD 100 is positioned over the user's face and disposed over one or both of the user's eyes. The HMD 100 can be connected to the retention band 108. In some examples, the retention band 108 can be positioned against the side of a user's head 110 and in contact therewith. In some examples, the retention band 108 can be at least partially positioned above the user's ear or ears. In some examples, the retention band 108 can be positioned adjacent to the user's ear or ears. The retention band 108 can extend around the user's head 110. In this way, the HMD 100 and the retention band 108 can form a loop that can retain the HMD 100 on the user's head 110.

Any of the features, components, and/or parts, including the arrangements and configurations thereof shown in FIG. 1 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 1.

FIG. 2 shows a schematic block diagram of an electronic device 200. The electronic device 200 can be substantially similar to, including some or all of the features of, the electronic devices described herein, such as HMD 100. The electronic device 200 can be an HMD. The electronic device 200 can include a display 206, a housing 202, a controller 203, and a sensor unit 204. The display 206 can include one or more optical lenses or display screens in front of the eyes of a user. The display 206 can present an augmented reality visualization, a virtual reality visualization, or other suitable visualization to a user. Additionally, the display 206 can be positioned in or on the housing 202 or frame that supports the display 206 and additional electronic components. The display 206 in combination with the frame or the housing 202 and other electronic components supported by the housing 202 can be referred to as a display unit.

The sensor unit 204 can be a camera (also referred to as a camera module). The sensor unit 204 can include one or more integral components. For example, the sensor unit 204 can include a lens barrel 214, a substrate 216, a sensor silicon 218, and a motion sensor 212, such as an inertial measurement unit (IMU) 212. The electronic device 200 can be a wearable device and can include electronic components that are communicatively coupled to each other and to the sensors 204 via a wired or wireless communications link. The communications link can be a physical connection, such as an electrical wire, or can be a wireless connection, such as Bluetooth, WI-Fi, proximity sensors, etc.

In some examples, the electronic device 200 can be communicatively coupled to a companion electronic device, such as a remote, or a personal computing device such as a smart phone, a smart watch, a laptop, a tablet, an HMD, or any other form of electronic device. As described in further detail below, the signals from the sensor unit 212 can influence the electronic device 200. For example, the sensor unit 212 can influence the visual information, content, style, frequency, and operation of the electronic device 200.

In some examples, the IMU 212 includes at least one of an accelerometer, a gyroscope, or a magnetometer. In some examples, the electronic device 200 can include multiple IMUs for redundancy. In some examples, multiple IMUs can be positioned on the sensor unit 204. An average of the motion data acquired by the multiple IMUs can be analyzed to improve the signal to noise ratio.

The controller 203 can include one or more processors (*e.g.,* a system on chip, integrated circuit, driver, microcontroller, application processor, crossover processor, etc.). Further, the controller 203 can include one or more memory devices (*e.g.,* individual nonvolatile memory, processor-embedded nonvolatile memory, random access memory, memory integrated circuits, DRAM chips, stacked memory modules, storage devices, memory partitions, etc.). In some examples, the controller 203 is communicatively coupled to the sensor unit 204.

In some examples, the controller 203 stores sensor data received from the sensor(s) 304 in the memory. The controller 203 can receive and/or transmit signals based on sensor data. For example, as will be described below, the controller 203, by way of the processor and memory, can transmit a signal to the display 206 based on the sensor data (*e.g*., causing the display 206 or the electronic device 200 to perform an action, such as present a certain message, power off, recalibrate, react to sensor feedback, etc.

The controller 203 can perform any number of different functions. For example, the memory device can store computer-executable instructions that, when executed by the processor, cause the controller 203 to receive sensor data from the sensor unit 204 and transmit a signal based on the sensor data. For instance, the controller 203 can transmit a sensor signal to a display 206. In response to the controller 203, the display 206 can perform a wide variety of actions, including power off or power on, react to a user generated facial expression, present a digital notification (e.g., user-generated notification, push notification, context-generated notification, system-generated notification, smart notification, etc.). In some examples, the memory device storing computer-executable instructions that, when executed by the processor, cause the controller 203 to transmit a signal based on the sensor data, and perform an action in response to the signal.

Any of the features, components, and/or parts, including the arrangements and configurations thereof shown in FIG. 2 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 2.

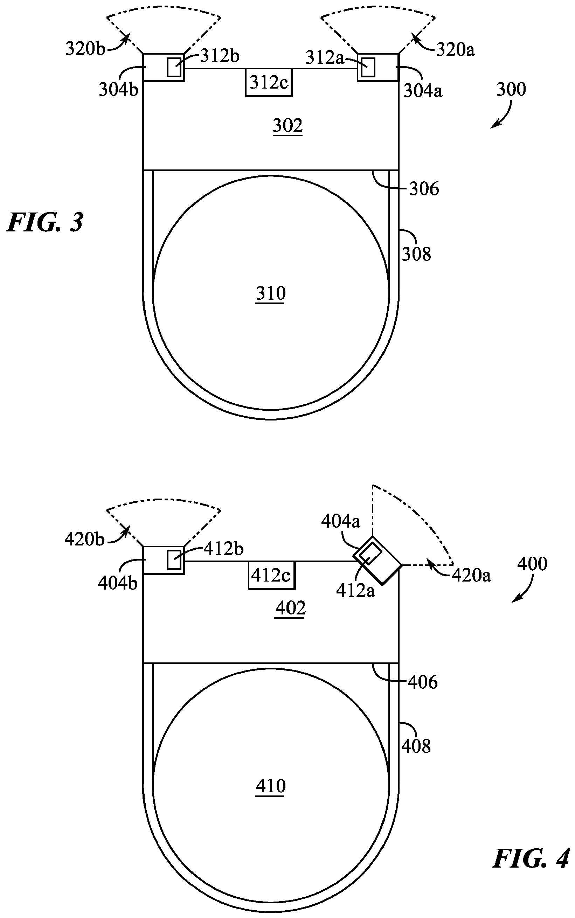

FIG. 3 shows a top view of a head-mountable device (HMD) 300. The HMD 300 can be substantially similar to, including some or all of the features of, the electronic devices described herein, such as head-mountable device 100 and electronic device 200. As illustrated, the HMD 300 can include a display 306, a housing 302, and one or more sensors 304a, 304b (collectively referred to as sensors 304). The sensors 304 can be embedded, encapsulated, deposited, adhered, or otherwise attached to the housing 302. The sensors 304 can be cameras, operatively aligned to one another. In some examples, the sensor 304 can map an environment based on collected visual data. The sensors 304a, 304b can include motion sensors or IMUs 312a, 312b, respectively. The IMUs 312a, 312b (collectively referred to as IMUs 312), upon detecting motion, can transmit a signal to a component of the HMD 300 causing the HMD 300 to perform an action. For example, the HMD 300 can change shape (i.e., tighten or loosen), move, vibrate, rotate, recalibrate, or reposition in response to the sensor signal.

In some examples, the first camera 304a and the second camera 304b can be used to detect horizon and orientation of the HMD, as well as depth of the environment surrounding the HMD (i.e., object detection). In some examples, the sensor 304a can be a first camera 304a, and the sensor 304b can be a second camera 304b. The first camera 304a can be oriented to have a first field of view 320a. The second camera 304b can be oriented to have a second field of view 320b. The HMD 300 can rely on the first camera 304a and the second camera 304b for tracking itself or other objects. Thus, knowledge of the pose of each camera is critical for sufficient tracking precision and accuracy. In other words, being able to accurately determine the orientation and field of view of each camera can be crucial to operation of the HMD 300. In some examples, an integrated IMU, such as IMUs 312 can be used for image stabilization. The IMUs can also be tasked with monitoring the motion of the HMD 300 as a whole.

In some examples, the pose of the first camera 304a is dependent on the pose of the second camera 304b. For example, the field of view 320a of the first camera 304a is operationally aligned with the field of view 320b of the second camera 304b. As used here, "operationally aligned" or "operationally coupled" can refer to two or more sensors that are partially or entirely reliant upon one another to gather certain data. For example, the pose, position, or orientation of the sensors may need to be in sync relative to one another in order for the received sensor data to be correctly understood. Operationally aligned can refer to the need for a sensor to be aligned or oriented in a certain way relative to another sensor in order to accurately perform a certain operation (e.g., the cameras may need to be operationally aligned to properly track and image the environment). Operationally aligned can refer to an expectation that the sensors are positioned relative to one another in a predetermined manner.

As illustrated, as discussed in greater detail herein, the IMUs 312a, 312b can be integrally mounted or attached to the first camera 304a and second camera 304b, respectively. The first IMU 312a can detect a motion of the first camera 304a, and the second IMU 312b can detect a motion of the second camera 304b. The readings of the first IMU 312a can be used to determine a pose of the first camera 304a. The readings of the second IMU 312b can be used to determine a pose of the second camera 304b. The determined poses of the first and second cameras 304a, 304b can then be used to determine the first and second field of views 320a, 320b.

In some examples, motion data from the first IMU 312a can be compared with motion data from the second IMU 312b to determine the pose of the first camera 304a and/or second camera 304b relative to each other or relative to the HMD 300. Motion data can refer to any information related to the movement of the relevant component. Motion data can also refer to the relative pose, position or orientation of the component. For example, motion data can include information related to the acceleration, pitch, yaw, and roll of a component. In some examples, the HMD 300 include a third IMU 312c that is disposed on or in the housing 302 of the HMD 300. The third IMU 312c can detect motion of the housing 302. In some examples, the motion data from the first IMU 312a and/or from the second IMU 312b can be compared against the motion data from the third IMU 312c to determine a pose of the first camera 304a and/or a pose of the second camera 304b.

In some examples, the third IMU 312c can be considered an anchor IMU that is presumed by the controller to not move. The readings from the first IMU 312a and the second IMU 312b can then be compared using the readings from the third IMU 312c as the presumed true readings.

Any of the features, components, and/or parts, including the arrangements and configurations thereof shown in FIG. 3 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 3.

FIG. 4 shows a top view of an HMD 400 having a misaligned sensor 404a. The HMD 400 can be substantially similar to, including some or all of the features of, the head-mountable devices described herein, such as HMD 100, 200, and 300. Indeed, the HMD 400 can be identical to the HMD 300 with the exception that the first camera 404a is out of position.

For example, the HMD 400 can include a first IMU 412a integrally attached to a first camera 404a, a second IMU 412b integrally attached to a second camera 404a, a third IMU 412c attached to the housing 402, a headband 408, and a display 406. In contrast to FIG. 3, which depicts the sensors 412 operationally aligned, FIG. 4 depicts the first camera 412a out of alignment with the second camera 412b. The HMD 400 can undergo various environmental and handling stresses that can result in significant deformations affecting the pose of the first camera 404a. When camera pose relative to other cameras is uncertain, the accuracy of the camera system can be reduced. Therefore, methods to understand camera pose relative to other cameras is critical to ensure a quality user experience.

It will be understood that using an IMU that is separate from the first camera 412a may also shift relative to the first camera, and thus is not reliable in determining the pose of the first camera 412a. For example, if the system was relying on the third IMU 412c to detect the motion and pose of the first camera 404a, a shift in the first camera 404a relative to the housing 402 would not be detected by the third IMU 412c. Advantageously, an integrated IMU, such as the first IMU 412a, can detect motion of the first camera 404a that is independent from motion of the rest of the HMD 400.

A controller can use various methods for determining that the first camera 412a is out of alignment with the second camera 404b. For example, in the event that the HMD 400 is powered on and a force, such as a collision or drop event, causes the first camera 404a to change its pose relative to the second camera 404b, the first IMU 412a will register movement of the first camera 404a, while the second IMU 412b and third IMU 412c will detect a much smaller movement, or no movement at all.

Accordingly, the controller can be programmed to identify instances in which a discrepancy exists between the IMUs 412a, 412b, 412c (collectively referred to as IMUs 412). Such discrepancies can be used in part or in whole to determine that a sensor is out of alignment. In some examples, data from additional sensors can be used together with the motion data from the IMUs 412 to determine that the first camera 404a is askew. For example, the visual data from one or more of the first and second cameras 404a, 404b can be used in conjunction with the motion data from one or more of the IMUs 412 to determine that the first camera 404a is misaligned. The IMUs 412 can consume much less power than the cameras 404. Therefore, it can be advantageous to acquire motion information from an integrated IMU rather than from a camera.

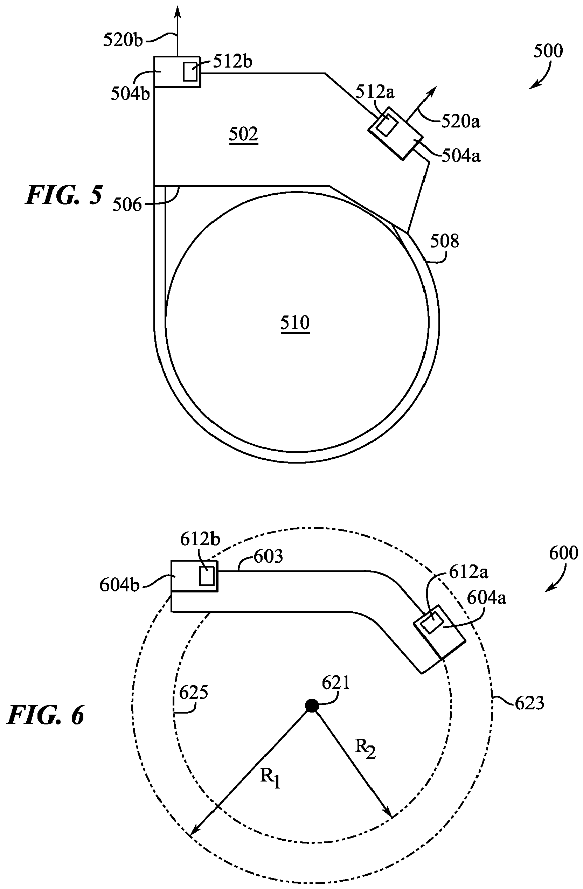

In some examples, the HMD 400 can determine that a motion event occurred after the fact. For example, the motion event of the first camera 404a, may have occurred when the HMD 400 was powered off. Thus, the HMD 400 would not be capable of detecting the motion event, such as a collision, bend, or drop event at the time it occurred. In such instances, once the HMD 400 is powered on, the system can look for discrepancies or irregularities in the motion data from the IMUs as the HMD 400 is moved. In some examples, a user may be instructed or prompted to move the HMD 400 is a certain manner to allow the IMUs to gather motion data utilized for an alignment test. This concept is discussed in greater detail with reference to FIG. 6.

Any of the features, components, and/or parts, including the arrangements and configurations thereof shown in FIG. 4 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 4.

FIG. 5 shows a top view of a head-mountable device having a misaligned sensor 504a. The HMD 500 can be substantially similar to, including some or all of the features of, the head-mountable devices described herein, such as HMD 100, 200, 300, and 400.

The HMD 500 can be substantially similar to HMDs 300 and 400. For example, the HMD 500 can include a first IMU 512a integrally attached to a first camera 504a, a second IMU 512b integrally attached to a second camera 504a attached to the housing 502, a headband 508, and a display 506. In contrast to FIG. 3, which depicts the sensors 512 operationally aligned, and in contrast with FIG. 4, which depicts the first camera 412a out of alignment with the second camera 412b and the housing 402, FIG. 5 depicts a deformation in the housing 502 itself, which causes a misalignment between the first camera 504a and the second camera 504b.

The housing 502 (including the frame) of the HMD 500 can undergo various environmental and handling stresses that can result in significant deformations affecting the shape of the housing 502 and the pose or orientation of the sensors. When the shape of the housing 502 is uncertain, the accuracy of on-board sensors can be reduced. Therefore, methods to understand camera pose relative to the housing and relative to other cameras is critical to ensure a quality user experience.

It will be understood that using an IMU separate from the first camera 512a may also shift relative to the first camera, and thus is not reliable in determining the pose of the first camera 512a. For example, if the system was relying on the second IMU 512b to detect the motion and pose of the first camera 504a, a shift in the first camera 504a relative to the second IMU 512 would not be detected by the second IMU 512b. Advantageously, an integrated IMU, such as the first IMU 512a, can detect motion of the first camera 504a that is independent from motion of the rest of the HMD 500.

Accordingly, the controller can be programmed to identify instances in which a discrepancy exists between the IMUs. Such discrepancies can be used in part or in whole to determine that a sensor is out of alignment. In some examples, data from additional sensors can be used in together with the motion data from the IMUs to determine that the first camera 504a is askew. For example, the visual data from one or more of the first and second cameras 504a, 504b can be used in conjunction with the motion data from one or more of the IMUs, 512a, 512b to determine that the camera 504 are out of alignment.

Any of the features, components, and/or parts, including the arrangements and configurations thereof shown in FIG. 5 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 5.

FIG. 6 shows a method for determining misalignment of sensors. The HMD 600 can be substantially similar to, including some or all of the features of, the head-mountable devices described herein, such as HMD 100, 200, 300, 400, and 500. The HMD 600 includes a frame 603. The first and second cameras 604a, 604b are attached to the frame. Therefore, any deformation in the frame 603 can impact the relative pose and position of the cameras 604a, 604b.

In some examples, the HMD 600 can determine that a motion event occurred not immediately after the motion event. For example, the motion event of the first camera 604a, may have occurred when the HMD 600 was powered off. Thus, the HMD 600 would not be capable of detecting the motion event, such as a collision, bend, or drop event at the time it occurred. In such instances, once the HMD 600 is powered on, the system can look for discrepancies or irregularities in the motion data from the IMUs as the HMD 600 is moved. In some examples, a user may be instructed or prompted to move the HMD 600 is a certain manner to allow the IMUs to gather motion data utilized for an alignment test.

For example, a misalignment of the cameras 604a, 604b can be detected by observing rotational motion data as the HMD 600 rotates about an axis 621. Because the frame 603 is bent, the rotational path 625 of the first camera 604a is different than the rotational path 623 of the second camera 604b (i.e., different than its expected path when rotated about axis 621). As illustrated, the rotational path 623 of the second camera 604b has a radius of R1 from the central axis 621, and the rotational path 625 of the first camera 604a has a radius of R2 from the central axis 621. In this example, R2 is smaller than R1. Consequently, the second IMU 612b will measure a different centripetal acceleration (also referred to as the centrifugal force) than the first IMU 612a as the HMD 600 is rotated. This difference is measured forces can indicated to the system that an event occurred causing the first camera 604a to be out of alignment with the second camera.

Any of the features, components, and/or parts, including the arrangements and configurations thereof shown in FIG. 6 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 6.

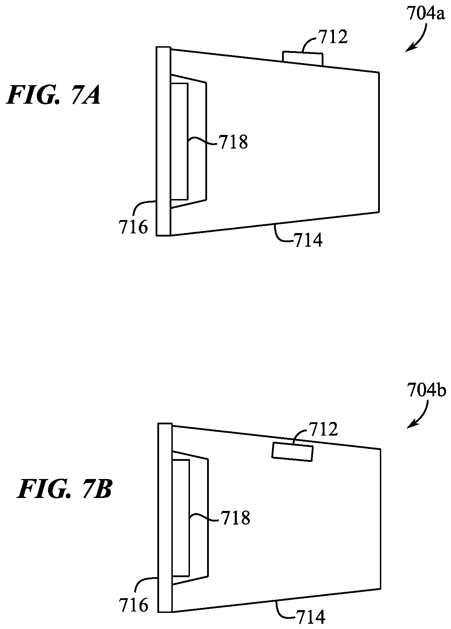

FIG. 7A shows a motion sensor 712 integrally attached to an exterior of a camera module 704a. As used herein "integrally attached" can refer to the motion sensor 712 being directly connected, attached or coupled to the camera module 704a. The camera module 704 can be substantially similar to, including some or all of the features of, the sensors described herein, such as cameras, 204, 304, 404, 504, and 604.

The camera module 704a can include a lens barrel 714, a substrate 716, and a photon detector 718. The lens barrel 714 (also known as a lens body or lens assembly) can include an elongated or tube shaped housing that holds various lens components. The lens barrel 714 can be manufactured from a wide variety of materials including plastic or metal. The substrate 716 can be mounted to a surface of the HMD, such as the frame or housing, and can couple the lens barrel 714 and photon detector 718 to the HMD. The substrate 716 can be adhered to the HMD using any suitable adhesive. In some examples, the substrate is mechanically fastened to the HMD (e.g., using screws, brackets, clips, or any other suitable fastener). In some examples, the substrate 716 can be magnetically coupled to the HMD.

The lens barrel 714 and/or the photon detector 718 can be coupled to a side of the substrate, opposite the side that is coupled to the HMD. The lens barrel 714 and/or photon detector 718 can be adhered to the substrate 716 using any suitable adhesive. In some examples, the substrate 716 is mechanically fastened to the lens barrel 714 and/or the photon detector 718 (e.g., using screws, brackets, clips, or any other suitable fastener). In some examples, the substrate 716 can be magnetically coupled to the lens barrel 714 and/or the photon detector 718.

The photon detector 718 can be an optical sensor, a chip, silicon substrate, CMOS, or any other suitable imaging sensor to detecting light. In some examples, the photon detector 718 can be positioned between the lens barrel 714 and the substrate 716. In some examples, the lens barrel 714 can define a cavity or volume within which the photon detector 718 is disposed.

As shown in FIG. 7A, the motion sensor 712 can be integrally attached to an exterior surface of the lens barrel 714. In some examples, the motion sensor 712 is adhered to the lens barrel 714 using any suitable adhesive. In some examples, the motion sensor 712 is mechanically fastened to the lens barrel 714 (e.g., using screws, brackets, clips, or any other suitable fastener). In some examples, the motion sensor 712 can be magnetically coupled to the lens barrel 714.

In some examples, the lens barrel 714 can include electronics, such as and circuitry, wires, flex cables, etc. needed to electronically connect the motion sensor 712 to a processor. In some examples, the circuitry can run inside or through the lens barrel 714. The circuitry can run along an exterior of the lens barrel 714. In some examples, the circuity is encapsulated in the walls of the lens barrel 714.

By being directly positioned on the exterior of the lens barrel 714, the chances of the camera module 704a moving independent from the integrally attached motion sensor 712 are greatly reduced. Thus, any misalignment between the camera module 704a and another sensor that is intended to be in operationally alignment with the camera module 704a will be more easily detected.

FIG. 7B shows a camera module 704b. The camera module 704b can be substantially similar to, including some or all of the features of, the camera modules described herein, such as cameras 204, 304, 404, 504, 604, and 704a. The camera module 704b can be identical to the camera module 704a of FIG. 7A, with the exception that the motion sensor 712 is disposed at least partially or entirely within the lens barrel 714. In some examples, the motion sensor 712 can be encapsulated in the lens barrel 714. The lens barrel 714 can define a recess or cavity within which the motion sensor 712 is disposed.

In some examples, the lens barrel 714 is made from plastic and can provide thermal insulation to the motion sensor 712. In some examples, the lens barrel 714 can include electronics, such as and circuitry, wires, flex cables, etc. needed to electronically connect the motion sensor 712 to a processor. In some examples, the circuitry can run inside or through the lens barrel 714. The circuitry can run along an exterior of the lens barrel 714. In some examples, the circuity is encapsulated in the walls of the lens barrel 714.

Any of the features, components, and/or parts, including the arrangements and configurations thereof shown in FIGS. 7A and 7B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 7A and 7B.

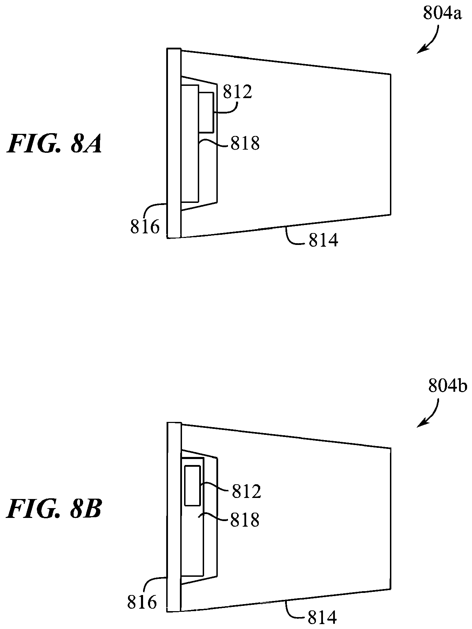

FIG. 8A shows a camera module 804a. The camera module 804a can be substantially similar to, including some or all of the features of, the camera modules described herein, such as cameras 204, 304, 404, 504, 604, 704a, 704b. The camera module 804b can include a lens barrel 814, a substrate 816, a photon detector 818, and a motion sensor 812. The camera module 804a can be identical to the camera module 704a of FIG. 7A, with the exception the motion sensor 812 is attached to a surface of the photon detector 818.

As shown in FIG. 8A, the motion sensor 812 can be integrally attached to an exterior surface of the photon detector 818. In some examples, the motion sensor 812 is adhered to the photon detector 818 using any suitable adhesive. In some examples, the motion sensor 812 is mechanically fastened to the photon detector 818 (e.g., using screws, brackets, clips, or any other suitable fastener). In some examples, the motion sensor 812 can be magnetically coupled to the photon detector 818. By being directly positioned on the exterior of the photon detector 818, the chances of the camera module 804a moving independent from the integrally attached motion sensor 812 are greatly reduced. Thus, any misalignment between the camera module 804a and another sensor that is intended to be in operationally alignment with the camera module 804a will be more easily detected and compensated for.

An advantage of positioning the IMU 812 on or closer to the photon detector 818 is that the system can experience reduced latency between when transmitting signals from the IMU 812. By positioning the IMU 812 immediately proximate the camera module 804a, computational and power requirements can be reduced. The camera module 804a and the IMU 812 can share a data bus, resulting in less wires. Further, the timing of collection of photons by the photon detector 818 and the detection and transmission of motion data can be closer in time due to the proximity of the IMU 812 and the photon detector 818. In other words, the visual data and motion data can be more in sync because of the direct attachment of the IMU 812 to the photon detector 818.

FIG. 8B shows a camera module 804b. The camera module 804b can be substantially similar to, including some or all of the features of, the camera modules described herein, such as cameras 204, 304, 404, 504, 604, 704a, 704b, 804a. The camera module 804b can include a lens barrel 814, a substrate 816, a photon detector 818, and a motion sensor 812. The camera module 804b can be identical to the camera module 704a of FIG. 7A, with the exception that the motion sensor 812 is disposed at least partially within the photon detector 818.

As shown in FIG. 8A, the motion sensor 812 can be integrally attached or encapsulated into a cavity or recess of the photon detector 818. In some examples, the motion sensor 812 can be molded into the photon detector 818. In some examples, the motion sensor 812 is adhered in the photon detector 818 using any suitable adhesive. In some examples, the motion sensor 812 is mechanically fastened to the photon detector 818 (e.g., using screws, brackets, clips, or any other suitable fastener). In some examples, the motion sensor 812 can be magnetically coupled to the photon detector 818.

The photon detector 818 can be positioned along a focal plane of the camera module 804b. Beneficially, because the IMU 812 is integrated onto the photon detector 818, it aligns with the focal plane of the camera 804b. Thus, any repositioning or misalignment experienced by the photon detector 818 will also be experienced by the IMU 812, meaning that the IMU 812 will be aligned with the input of the camera, regardless of relative movements or shifts in the HMD or other camera components. By being securely position in the photon detector 818, the chances of the camera module 804b moving independent from the integrally attached motion sensor 812 are greatly reduced. Thus, any misalignment between the camera module 804b and another sensor that is intended to be in operationally alignment with the camera module 804b will be more easily detected and compensated for.

Any of the features, components, and/or parts, including the arrangements and configurations thereof shown in FIGS. 8A and 8B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 8A and 8B.

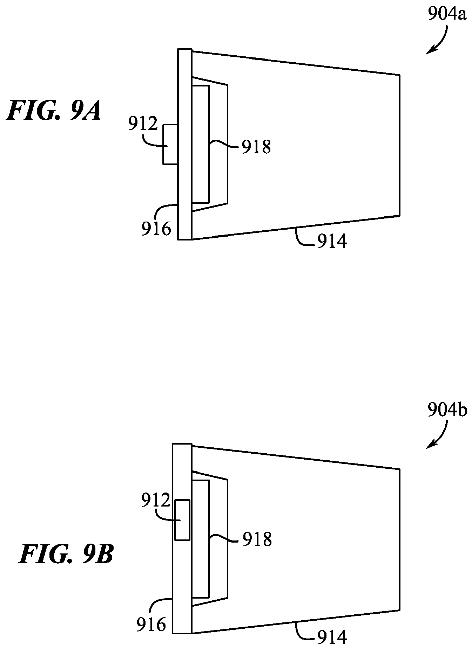

FIG. 9A shows a camera module 904a. The camera module 904a can be substantially similar to, including some or all of the features of, the sensors or camera modules described herein, such as cameras 204, 304, 404, 504, 604, 704a, 704b, 804a, 804b. The camera module 904a can include a lens barrel 914, a substrate 916, a photon detector 919, and a motion sensor 912. The camera module 904a can be identical to the camera module 704a of FIG. 7A, with the exception that the motion sensor 912 is attached to a surface of the substrate 916. The motion sensor 912 can be positioned between the substrate 916 and a frame, housing, or bracket of the HMD. In some examples, the frame, housing or bracket of the HMD can include a recess to accommodate for the motion sensor 912. In other words, the substrate 916 can remain flush against the frame, housing, or bracket despite the motion sensor 912 being sandwiched between the frame and the substrate 916 because the frame, housing, or bracket includes a space to receive the motion sensor 912.

As shown in FIG. 9A, the motion sensor 912 can be integrally attached to an exterior surface of the substrate 916. In some examples, the motion sensor 912 is adhered to the substrate 916 using any suitable adhesive. In some examples, the motion sensor 912 is mechanically fastened to the substrate 916 (e.g., using screws, brackets, clips, or any other suitable fastener). In some examples, the motion sensor 912 can be magnetically coupled to the substrate 916. In some examples, the motion sensor 912 is secured in place by its position between the substrate 916 and the frame, housing, or bracket to which the substrate 916 is secured. By being directly secured to the substrate 916, the chances of the camera module 904a moving independent from the integrally attached motion sensor 912 are greatly reduced. Thus, any misalignment between the camera module 904a and another sensor that is intended to be in operationally alignment with the camera module 904a will be more easily detected and compensated for.

FIG. 9B shows a camera module 904b. The camera module 904b can be substantially similar to, including some or all of the features of, the camera modules described herein, such as cameras 204, 304, 404, 504, 604, 704a, 704b, 804a, 804b, 904a. The camera module 904b can include a lens barrel 914, a substrate 916, a photon detector 919, and a motion sensor 912. The camera module 904b can be identical to the camera module 704a of FIG. 7A, with the exception that the motion sensor 912 is disposed at least partially within the substrate 916.

As shown in FIG. 9B, the motion sensor 912 can be at least partially encapsulated into a cavity or recess of the substrate 916. In some examples, the motion sensor 912 can be molded into the substrate 916. In some examples, the motion sensor 912 is adhered in the substrate 916 using any suitable adhesive. In some examples, the motion sensor 912 is mechanically fastened in the substrate 916 (e.g., using screws, brackets, clips, or any other suitable fastener). In some examples, the motion sensor 912 can be magnetically coupled in the substrate 916. In some examples, the motion sensor 912 is secured in place by its position between the substrate 916 and the frame, housing, or bracket to which the substrate 916 is secured.

By being securely position in the substrate 916, the chances of the camera module 904b moving independent from the integrally attached motion sensor 912 are greatly reduced. Thus, any misalignment between the camera module 904b and another sensor that is intended to be in operationally alignment with the camera module 904b will be more easily detected and compensated for. Advantageously, positioning the motion sensor 912 on the substrate 916 allows for a standardization of the design across multiple different sensors. In some examples, one or more of the cameras components (i.e., lens barrel, photon detector, substrate) can include an integrated IMU to detect internal misalignments within the camera itself.

Any of the features, components, and/or parts, including the arrangements and configurations thereof shown in FIGS. 9A and 9B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 9A and 9B.

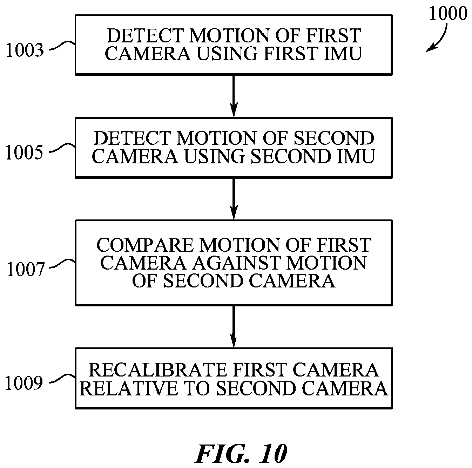

FIG. 10 shows a process flow diagram for detecting a misalignment between sensors of an electronic device and recalibrating the sensors. At step 1003, a motion of a first camera can be detected using a first IMU that is integrally attached or mounted to the first camera. As described herein, because the first IMU is directly affixed to an integral component of the camera, a movement of the first camera that is independent from the electronic device can still be detected by the first IMU.

At step 1005, a motion of a second camera can be detected using a second IMU that is integrally attached or mounted to the second camera. As described herein, because the second IMU is directly affixed to an integral component of the camera, a movement of the second camera that is independent from the electronic device can still be detected by the second IMU.

At step 1007, a motion of the first camera, detected by the first IMU, can be compared with a motion of the second camera, detected by the second IMU. The comparison can be performed by a processor that receives signals from the first and second IMUs. In some examples, a determination that the system is misaligned can be made by comparing relative changes (deltas) in the IMUs. Based on the relative changes in IMU data, the pose of each camera module can be calculated.

The processor can compare motion data against expected motion data. In some examples, the expected motion data is based on motion data from the second IMU. In response to the analyzed motion data received from the integrated IMU varying from an expected data beyond a predetermined threshold, the processor can generate a signal to cause the HMD to perform an action. In some examples, a motion sensor can receive motion data. The motion data can be transmitted to a processor. The processor can compare the received motion data to expected motion data and if the received motion data varies from the expected motion data above a predetermined threshold, the processor can adjust an operating parameter of the head-mountable device. For example, adjusting an operating parameter can include recalibrating the cameras or other sensors to account for a misalignment, notifying the user of a misalignment, or adjusting a position of a sensor.

At step 1009, the first camera can be recalibrated relative to the second camera based on the comparison performed at step 1007. Recalibration of the first camera can include adjusting a position or pose of the first camera. In some examples, recalibration of the first camera include modifying the software or algorithms to compensate for the misalignment. In some examples, the system recalibrates by updating the modifying the pose or pointing vector. In some examples, the system recalibrates by updating nodes in a calibration tree to account for the new pointing vector of the camera. The recalibration can include modifying an operating protocol of the HMD system.

In examples where personally identifiable information is used, such information should be used in accordance with privacy policies and practices that are generally recognized as meeting or exceeding industry or governmental requirements for maintaining the privacy of user, and should minimize risks of unintentional or unauthorized access or use.

The foregoing description is intended to provide a thorough understanding of the described embodiments. The specific details are not required in order to practice the described examples, and examples described herein are presented for purposes of illustration and description only. The examples provided herein are not intended to be exhaustive or to limit the embodiments to the precise forms disclosed.

### Additional Statements:

1. A head-mountable device comprising:
   a display;
   a housing;
   a camera module comprising:
      a lens assembly;
      an optical sensor; and
      a substrate;
   a motion sensor attached to the camera module and configured to determine a motion of the camera module; and
   a processor communicatively connected to the motion sensor, the processor configured to generate a signal based on the motion.
2. The head-mountable device of statement 1, wherein:
   the camera module is a first camera module and the head-mountable device comprises a second camera module;
   the motion sensor is a first motion sensor configured to transmit first motion data to the processor;
   the first motion sensor is directly attached to at least one of the lens assembly, the optical sensor, or the substrate;
   the second camera module comprises a second motion sensor configured to transmit second motion data to the processor; and
   the processor is configured to compare the first motion data and the second motion data.
3. The head-mountable device of either of statements 1 or 2, wherein:
   the lens assembly comprises a lens barrel that houses a lens; and
   the motion sensor is attached to the lens barrel.
4. The head-mountable device of any preceding statement, wherein the motion sensor at least partially defines an exterior of the camera module.
5. The head-mountable device of any of statements 1 to 3, wherein the motion sensor is encapsulated in the camera module.
6. The head-mountable device of any of statements 1 to 3, wherein the motion sensor is disposed within a cavity defined by the camera module.
7. The head-mountable device of any preceding statement, wherein the motion sensor is configured to detect a movement of the camera module relative to the housing.
8. The head-mountable device of any preceding statement, wherein, the signal generated by the processor causes a change in an operating protocol of the head-mountable device.
9. The head-mountable device of any preceding statement, wherein the motion sensor comprises at least one of a gyroscope, an accelerometer, or a magnetometer.
10. The head-mountable device of any preceding statement, wherein:
   the motion sensor is configured to receive motion data;
   the processor is configured to compare the received motion data to expected motion data; and
   if the received motion data varies from the expected motion data above a predetermined threshold, the processor adjusts an operating parameter of the head-mountable device.
11. The head-mountable device of statement 10, wherein adjusting the operating parameter comprises recalibrating the camera module to account for a misalignment of the camera module.
12. The head-mountable device of either of statements 10 or 11, wherein:
   the camera module is a first camera module and the head-mountable device comprises a second camera module that is operationally coupled to the first camera module;
   the motion sensor is a first motion sensor and the second camera module comprises a second motion sensor; and
   the expected motion is based on motion data from the second motion sensor.
13. An electronic device comprising:
   a first sensor;
   a second sensor configured to be operationally aligned with the first sensor;
   an inertial measurement unit (IMU) disposed on the first sensor and configured to generate a signal based on motion of the first sensor; and
   a processor configured to receive the signal and detect a misalignment between the first sensor and the second sensor based on the signal.
14. The electronic device of statement 13, wherein;
   the first sensor comprises a first camera; and
   the second sensor comprises a second camera.
15. The electronic device of either of statements 13 or 14, wherein the signal is based on a rotational motion of the first sensor.
16. The electronic device of any of statements 13 to 15, wherein the IMU is configured to detect a motion of the electronic device and to detect a motion of the first sensor.
17. The electronic device of any of statements 13 to 16, wherein:
   the first sensor is attached to a frame of the electronic device at a first location;
   the second sensor is attached to the frame at a second location;
   the IMU is a first IMU directly attached to the first sensor; and
   the second sensor comprises a second IMU directly attached to the second sensor.
18. A camera module comprising:
   a lens barrel;
   a photon detector;
   a substrate; and
   an inertial measurement unit directly connected to at least one of the lens barrel, the photon detector, or the substrate.
19. The camera module of statement 18, wherein the inertial measurement unit comprises at least one of a gyroscope, an accelerometer, or a magnetometer.
20. The camera module of either of statements 18 or 19, wherein the inertial measurement unit is disposed in a recess defined by the camera module.

## Claims

1. A head-mountable device comprising:
a display;
a housing;
a camera module comprising:
a lens assembly;
an optical sensor; and
a substrate;
a motion sensor attached to the camera module and configured to determine a motion of the camera module; and
a processor communicatively connected to the motion sensor, the processor configured to generate a signal based on the motion.

2. The head-mountable device of claim 1, wherein:
the camera module is a first camera module and the head-mountable device comprises a second camera module;
the motion sensor is a first motion sensor configured to transmit first motion data to the processor;
the first motion sensor is directly attached to at least one of the lens assembly, the optical sensor, or the substrate;
the second camera module comprises a second motion sensor configured to transmit second motion data to the processor; and
the processor is configured to compare the first motion data and the second motion data.

3. The head-mountable device of either of claims 1 or 2, wherein:
the lens assembly comprises a lens barrel that houses a lens; and
the motion sensor is attached to the lens barrel.

4. The head-mountable device of any preceding claim, wherein the motion sensor at least partially defines an exterior of the camera module.

5. The head-mountable device of any of claims 1 to 3, wherein the motion sensor is encapsulated in the camera module.

6. The head-mountable device of any of claims 1 to 3, wherein the motion sensor is disposed within a cavity defined by the camera module.

7. The head-mountable device of any preceding claim, wherein the motion sensor is configured to detect a movement of the camera module relative to the housing.

8. The head-mountable device of any preceding claim, wherein, the signal generated by the processor causes a change in an operating protocol of the head-mountable device.

9. The head-mountable device of any preceding claim, wherein the motion sensor comprises at least one of a gyroscope, an accelerometer, or a magnetometer.

10. The head-mountable device of any preceding claim, wherein:
the motion sensor is configured to receive motion data;
the processor is configured to compare the received motion data to expected motion data; and
if the received motion data varies from the expected motion data above a predetermined threshold, the processor adjusts an operating parameter of the head-mountable device.

11. The head-mountable device of claim 10, wherein adjusting the operating parameter comprises recalibrating the camera module to account for a misalignment of the camera module.

12. The head-mountable device of either of claims 10 or 11, wherein:
the camera module is a first camera module and the head-mountable device comprises a second camera module that is operationally coupled to the first camera module;
the motion sensor is a first motion sensor and the second camera module comprises a second motion sensor; and
the expected motion is based on motion data from the second motion sensor.

13. The head-mountable device of any preceding claim, wherein:
the camera module comprises a first sensor;
the head-mountable device further comprising a second sensor configured to be operationally aligned with the first sensor;
the motion sensor comprises an inertial measurement unit, IMU, disposed on the first sensor and configured to generate a motion signal based on motion of the first sensor; and
the processor is configured to receive the motion signal and detect a misalignment between the first sensor and the second sensor based on the motion signal.

14. The head-mountable device of claim 13, wherein:
the first sensor is attached to a frame of the electronic device at a first location;
the second sensor is attached to the frame at a second location;
the IMU is a first IMU directly attached to the first sensor; and
the second sensor comprises a second IMU directly attached to the second sensor.

15. The head-mountable device of any preceding claim, wherein the camera module comprises:
a lens barrel;
a photon detector;; and
wherein the motion sensor comprises an inertial measurement unit directly connected to at least one of the lens barrel, the photon detector, or the substrate.
